# EUROPÄISCHE PATENTSCHRIFT

(11) **EP 1 371 790 B1**
(45) Veröffentlichungstag und Bekanntmachung des Hinweises auf die Patenterteilung: **21.09.2011**
(21) Anmeldenummer: 03010717.1
(22) Anmeldetag: 13.05.2003
(51) Int. Cl.: E03F 5/10, C02F 1/00

(54) **Verfahren zum Auffangen von salzhaltigem Schmutzwasser**
Process for collecting salt-containing water
Procédé pour collecter de l'eau contenant du sel

(30) Priorität: 13.05.2002 DE 20207514 U
(43) Veröffentlichungstag der Anmeldung: 17.12.2003
(73) Patentinhaber: Brennecke, Peer, 28857 Syke (DE)
(72) Erfinder: Brennecke, Peer, 28857 Syke (DE); Auras, Michael, 27749 Delmenhorst (DE); Ködding, Michael, 30269 Hannover (DE)
(74) Vertreter: Scheffler, Jörg

(56) Entgegenhaltungen:
- DE-A- 4 240 057
- US-A- 5 569 372
- US-A1- 2001 047 965
- US-B1- 6 244 219

## Beschreibung

Die Erfindung betrifft ein Verfahren gemäß Anspruch 1.

Die verwendete Vorrichtung wird aufgrund der in den vergangenen Jahren verschärften Umweltschutzbestimmungen immer dann erforderlich, wenn ein Umschlag von Streusalz oder sonstigen salzhaltigen Streumitteln in fester oder flüssiger Form stattfindet. Solche Streumittelreste werden in dem natürlichen Niederschlag gelöst und finden so den Weg in das Erdreich, was mit den gültigen Umweltschutzvorschriften nicht vereinbar ist. Daher müssen entsprechende Vorkehrungen getroffen werden, durch die das Schmutzwasser einer geeigneten Behandlung zugeführt werden kann.

Betroffen von solchen Maßnahmen sind in der Praxis neben Großbetrieben mit einer eigenen, entsprechend großen Verkehrsfläche, beispielsweise Flughäfen oder Verladestationen, insbesondere auch Straßenmeistereien bzw. Straßenbauverwaltungen, die für den Zustand der öffentlichen Verkehrsflächen zuständig sind. Die Autobahn- und Straßenmeistereien müssen stets für den unter Umständen überraschenden Wintereinsatz entsprechende Streusalzmengen bevorraten. Die Anlieferung erfolgt in der Regel derzeit, indem das Streusalz auf dem Betriebshof abgeschüttet und mittels eines Radladers in eine Lagerhalle transportiert wird. Von dort gelangt das Streusalz über eine Förderschnecke in einen Silo, dessen Auslassöffnung bei Bedarf von dem Einsatzfahrzeug unterfahren und von diesem so die erforderliche Streusalzmenge aufgenommen werden kann. Zusätzlich wird Streusalz auch in Wasser gelöst und als Sole in Kombination mit Trockensalz durch entsprechende Streuvorrichtungen der Einsatzfahrzeuge auf den Straßenbelag aufgebracht, was zu einem besseren Streubild bei einer zugleich realisierbaren Salzeinsparung führt. Durch die Vielzahl der Handhabungsschritte des Streusalzes entstehen in der Praxis Verlustmengen, die über dem zulässigen Grenzwerten liegen.

Eine einfache Möglichkeit, den gesetzlichen Anforderungen zu genügen besteht darin, daß die Verlustmengen des Streusalzes durch eine geeignete Abdichtung der Umschlagplätze aufgefangen und der Abwasserkanalisation zugeführt werden, womit jedoch hohe Abwasserkosten verbunden sind.

Weiterhin könnten auch Witterungseinflüsse durch eine geeignete Überdachung der Umschlagplätze vermieden werden, um so eine einfache Rückgewinnung des Trockensalzes zu realisieren. Diese Möglichkeit erweist sich jedoch als wenig praxisgerecht, weil eine Überdachung aufgrund der großen Betriebsflächen bestehender Einrichtungen mit hohen Kosten verbunden ist. Ebenso scheitert eine Optimierung der Förderkette des Streusalzes, indem beispielsweise das Streusalz unmittelbar bei der Anlieferung in den Silo gefördert und die Befüllung des Einsatzfahrzeuges abgedichtet wird, aufgrund der erheblichen Investitionen, die durch solche Maßnahmen bei den vorhandenen Einrichtungen anfallen.

In der Praxis wird daher häufig von den betroffenen Betrieben die erstgenannte Möglichkeit realisiert, die lediglich geringe Investitionskosten verursacht, jedoch langfristig zu erhöhten Betriebskosten führt.

Der Erfindung liegt die Aufgabe zugrunde, eine Möglichkeit zu schaffen, mit vergleichsweise geringen Investitionskosten die Anforderungen an den Umweltschutz zu erfüllen. Dabei soll zugleich die Entsorgung über die Abwasserkanalisation verzichtbar sein.

Diese Aufgabe wird erfindungsgemäß mit einem Verfahren gemäß den Merkmalen des Patentanspruchs 1 gelöst. Die Unteransprüche betreffen besonders zweckmäßige Weiterbildungen der Erfindung.

Erfindungsgemäß ist also eine Vorrichtung verwendet mit einem Behälter zum Auffangen von salzhaltigem Schmutzwasser, insbesondere in Niederschlag gelöstes Streusalz, mit einem Einlass, durch den das Schmutzwasser eintritt, und mit einem Auslass, wodurch das Schmutzwasser mittels eines Verteilers wahlweise einem Mischbehälter zur Herstellung einer gewünschten Salzkonzentration oder einer Auslassöffnung zuführbar ist. Hierdurch wird das mittels des Behälters aufgefangene, salzhaltige Schmutzwasser zur weiteren Verwendung dem Mischbehälter zugeführt, wo gegebenenfalls eine Anreicherung des Salzgehaltes bis zu der gewünschten Konzentration stattfindet. Eine Entsorgung des Schmutzwassers ist daher ebensowenig erforderlich wie ein Anschluss an die Abwasserkanalisation, wodurch sich erhebliche Kosten einsparen lassen und zugleich die Anforderungen an den Umweltschutz problemlos erfüllt werden können. Zugleich wird bei der Herstellung der Sole in dem Mischbehälter sowohl Wasser, als auch Streusalz eingespart. Sofern beispielsweise während der Sommermonate keine relevante Salzkonzentration in der aufgefangenen Flüssigkeit vorhanden ist, kann das aufgefangene Schmutzwasser mittels des Verteilers über die Auslassöffnung auch einer weiteren Verwendung als Brauchwasser zu Reinigungszwecken oder zur Bewässerung zugeführt werden.

Eine besonders vorteilhafte Ausführungsform der vorliegenden Erfindung wird dabei dadurch erreicht, dass die Vorrichtung einen Füllstandssensor aufweist, der bei Erreichen eines maximalen Füllstandes ein Signal auslöst. Hierdurch wird das Erreichen des maximalen Füllstandes rechtzeitig erkannt, so dass das in dem Behälter vorhandene Schmutzwasser wahlweise dem Mischbehälter oder über die Auslassöffnung einer weiteren Verwendung zugeführt werden kann, bevor der Behälter überläuft. Sofern in besonderen Umständen auch die Mischbehälter gefüllt sind, kann so eine Entsorgung des salzhaltigen Schmutzwassers in die Abwasserkanalisation eingeleitet werden, bevor das Schmutzwasser in das Erdreich gelangen kann.

Der Füllstand könnte mittels eines Schwimmers erfasst werden. Besonders zuverlässig erweist sich jedoch in der Praxis eine Ausgestaltung, bei welcher der Füllstandssensor mit einem Ultraschallsensor ausgestattet ist. Hierdurch kann der Füllstand mit hoher Zuverlässigkeit und ohne Verschleißerscheinungen erfasst werden.

Dabei erweist es sich auch als besonders günstig, wenn der Füllstandssensor mittels einer Datenfernübertragung mit einer Steuereinheit verbunden ist. Hierdurch kann die Überwachung insbesondere von einer Kontrollstation weit entfernt angeordneter Behälter wesentlich vereinfacht werden. Mögliche Störungen können so frühzeitig erfasst werden, wobei regelmäßige Routinekontrollen weitgehend entfallen können.

Besonders praxisnah ist dabei eine Abwandlung der Erfindung, bei der die Datenfernübertragung zur drahtlosen Signalübertragung ausgeführt ist. Hierdurch sind für den Einsatz der Vorrichtung weder Leitungen, noch sonstige elektrische Verbindungen zwischen dem Einsatzort und einer Kontrollstation erforderlich, wobei insbesondere sowohl auf eine Energie-, als auch auf eine Wasserversorgung verzichtet werden kann.

Eine andere besonders vorteilhafte Abwandlung wird dadurch erreicht, dass die Vorrichtung mit einer in den Behälter hineinreichenden Spülleitung ausgestattet ist, durch die eine Spülflüssigkeit einer Innenwandfläche des Behälters zuführbar ist. Hierdurch können insbesondere zum Umstellen von Winter- auf Sommerbetrieb an der Innenwandfläche anhaftende Salzpartikel gelöst und mit der Spülflüssigkeit entfernt werden. Anschließend kann das danach aufgefangene, unbelastete Wasser bedenkenlos einer Verwendung zur Bewässerung zugeführt werden. Die Spülleitung kann hierzu beispielsweise als eine an der Innenwandfläche umlaufend angeordnete Leitung mit einer Vielzahl von Spülöffnungen, insbesondere Düsen, ausgeführt sein.

Dabei erweist sich eine Abwandlung als besonders zuverlässig, bei welcher der Behälter aus Beton mit einer Innenwandfläche aus einem salzwasserresistenten Kunststoffmaterial besteht. Hierdurch entsteht ein doppelwandiger Behälter, der auch bei einer Beschädigung der Innenwandfläche ein Austreten des Schmutzwassers in den Untergrund zuverlässig verhindert. Auf diese Weise kann der Sicherheitsstandard ebenso wie der Schutz gegen einen möglichen Verschleiß durch die Salzkonzentration weiter verbessert werden.

Hierzu eignet sich eine Ausgestaltung besonders gut, bei welcher der Behälter aus einem inneren und einem äußeren Formkörper aufgebaut ist. Die beiden Behälter werden hierzu weitgehend vorgefertigt und anschließend ineinander gesetzt. Dabei ist außerdem auch eine Modulbauweise realisierbar, bei welcher das Behältervolumen bedarfsweise und mit geringem Aufwand durch Hinzufügen oder Entfernen von Modulelementen geändert werden kann.

Eine andere besonders vorteilhafte Abwandlung der vorliegenden Erfindung wird auch dadurch geschaffen, dass der Behälter mit einem dem Einlass zugeordneten Filter ausgestattet ist. Hierdurch können unlösliche Bestandteile des Schmutzwassers, deren Korngröße insbesondere eine Düsenöffnung der üblicherweise eingesetzten Streuvorrichtungen für Sole überschreitet, mit geringem Aufwand aufgefangen und entfernt werden.

Weiterhin erweist sich eine weitere Ausgestaltung als besonders zweckmäßig, bei welcher der Verteiler ein Dreiwegeventil aufweist, um so eine einfache Umstellung von Winter- auf Sommerbetrieb zu ermöglichen.

Die Betätigung des Dreiwegeventiles kann manuell erfolgen. Besonders zweckmäßig ist hingegen auch eine Weiterbildung der Erfindung, bei welcher der Verteiler mit einer Steuereinheit automatisiert betätigbar ist. Hierdurch kann beispielsweise unter zusätzlicher Einbeziehung eines Spülprogrammes die Umstellung von Winter- auf Sommerbetrieb weitgehend ohne einen manuellen Eingriff erfolgen. Hierzu kann beispielsweise neben einer Erfassung der Außentemperatur auch eine Zeitsteuerung nach dem Kalenderdatum realisiert werden.

Eine weitere besonders erfolgversprechende Weiterbildung wird auch dadurch geschaffen, dass die Vorrichtung einen Sensor zur Bestimmung des Salzgehaltes in dem Behälter aufweist. Hierdurch kann die Salzkonzentration innerhalb des in dem Behälter aufgefangenen Schmutzwassers zuverlässig bestimmt und so bereits vor dem Entnehmen des Schmutzwassers eine Prüfung der Eignung, beispielsweise für Bewässerungszwecke, Reinigungsmaßnahmen oder zur Herstellung einer bestimmten Salzkonzentration, innerhalb des Mischbehälters vorgenommen werden. Dadurch kann das aufgefangene Schmutzwasser einer optimalen Verwendung zugeführt werden. Die Bestimmung des Salzgehaltes kann dabei beispielsweise mittels einer Leitfähigkeitsmessung realisiert werden.

Die Vorrichtung ist dazu vorgesehen, das durch die Streusalzreste verunreinigte Schmutzwasser aufzufangen. Eine weitere besonders erfolgversprechende Anwendung kann jedoch zusätzlich auch dann erreicht werden, wenn die Vorrichtung zum Auffangen von unerwünscht aus dem Mischbehälter oder aus einem anderen Solebehälter austretenden Flüssigkeit ausgeführt ist. Hierdurch dient die Vorrichtung zugleich dem Schutz der Umgebung bei einer auftretenden Beschädigung oder Undichtigkeit eines Misch- oder Solebehälters, der insbesondere auch unabhängig von der Vorrichtung betrieben sein kann. Daher kann auch bei solchen Behältern insbesondere bereits bestehender Anlagen auf die gegebenenfalls erforderliche Nachrüstung eines doppelwandigen Solebehälters verzichtet werden.

Eine besonders einfache Ausführungsform der Vorrichtung, bei welcher der Behälter zum unterirdischen Einbau ausgeführt ist, ermöglicht das Auffangen des Schmutzwassers ohne die Hilfe einer Pumpe, weil das Schmutzwasser durch ein geeignetes Gefälle des Sammelbereiches in den Behälter fließt. Lediglich zum Entleeren des Behälters ist daher im allgemeinen eine Pumpe, insbesondere eine Edelstahlpumpe, erforderlich, so dass der gewöhnliche Betrieb der Vorrichtung ohne Energieeinsatz auskommt.

Die Erfindung läßt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine geschnittene Seitenansicht einer erfindungsgemäßen Vorrichtung;
- Fig.2: eine geschnittene Draufsicht auf die in Figur 1 gezeigte Vorrichtung.

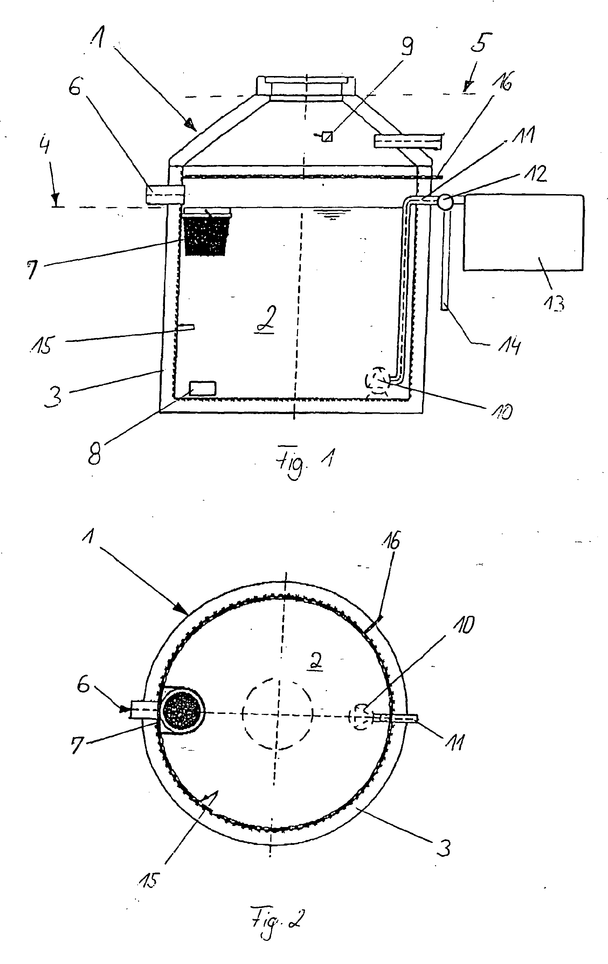

Figur 1 zeigt in einer geschnittenen Seitenansicht eine erfindungsgemäße Vorrichtung 1 zur Wiederverwendung bzw. Weiterverwertung von Schmutzwasser 2, welches zumindest jahreszeitbedingt eine erhöhte Salzkonzentration aufweist. Hierzu hat die insbesondere unterirdisch einzusetzende Vorrichtung 1 einen Behälter 3 für das Schmutzwasser 2, dessen Füllstand 4 in der dargestellten Betriebssituation etwa 2/3 des maximalen Volumens erreicht hat. Das Schmutzwasser 2 gelangt dabei durch ein geeignetes Gefälle eines nicht dargestellten Auffangbereiches durch einen unterhalb eines Bodenniveaus 5 angeordneten Einlass 6 in einen Filter 7, durch den insbesondere grobe Partikel aufgefangen werden. Mittel eines Sensors 8 zur Bestimmung des Salzgehaltes wird regelmäßig der Salzgehalt des Schmutzwassers 2 bestimmt und mittels einer Datenfernübertragung ebenso, wie die Signale eines Füllstandssensors 9, an eine nicht gezeigte Überwachungsstation übermittelt. Die ermittelten Messwerte dienen als Entscheidungsgrundlage hinsichtlich der weiteren Verwendung des Schmutzwassers. Sofern der Salzgehalt eine weitere Verwendung für Bewässerungs- oder Reinigungsmaßnahmen nicht gestattet, wird das Schmutzwasser 2 mittels einer Pumpe 10 durch einen Auslass 11 über einen Verteiler 12 einem Mischbehälter 13 für Sole zugeführt. Dem Mischbehälter 13 wird anschließend gegebenenfalls weiteres Streusalz zugeführt, bis die Konzentration der Sole den gewünschten Wert erreicht hat. Sofern ein erhöhter Salzgehalt nicht festgestellt wird, kann das Schmutzwasser 2 über eine andere Verteilerstellung einer Auslassöffnung 14 zugeführt und beispielsweise in ein Tankfahrzeug abgefüllt werden. Vor der Umstellung von Winter- auf Sommerbetrieb werden mittels einer an der Innenwandfläche 15 des Behälters 3 umlaufend angeordnete Spülleitung 16 anhaftende Salzpartikel gelöst und der gesamte Behälterinhalt dem Mischbehälter 13 zugeführt. Der Behälter 3 ist dabei als ein weitgehend vorgefertigter und modular aufgebauter Formkörper aus Beton ausgeführt, dessen Innenwandfläche 15 durch einen weiteren, aus einem Kunststoffmaterial, insbesondere PE, hergestellten Formkörper gebildet ist, um so eine die Betriebssicherheit erhöhende Doppelwandigkeit zu realisieren.

Ergänzend zeigt die Figur 2 die Vorrichtung 1 in einer geschnittenen Draufsicht. Zu erkennen ist der Einlass 6 durch den das Schmutzwasser 2 zunächst dem Filter 7 zugeführt und anschließend in dem Behälter 3 aufgefangen wird. Mittels der Pumpe 10 wird das Schmutzwasser 2 durch den Auslass 11 abgepumpt und steht damit einer weiteren Verwendung zu Verfügung. Sofern das Schmutzwasser 2 lediglich einen zu vernachlässigenden Salzgehalt aufweist, werden zunächst mittels der an der Innenwandfläche 15 des Behälters 3 umlaufend angeordneten Spülleitung 16 anhaftende Partikel gelöst und der Behälter 3 restlos entleert. Anschließend kann das danach aufgefangene Schmutzwasser auch zu Bewässerungszwecken eingesetzt werden.

Mittels der Vorrichtung 1 wird es erstmals möglich, salzhaltige Schmutzwasser nicht, wie nach dem Stand der Technik bekannt, der Entsorgung, sondern einer weiteren Verwendung zuzuführen, so dass neben der Rückgewinnung von Streusalz auch Trinkwasser eingespart werden kann. Zugleich können die Betriebskosten wesentlich verringert werden, weil eine Entsorgung praktisch nicht erforderlich ist. Während der Sommermonate dient die Vorrichtung 1 dabei der Rückgewinnung von Regenwasser, welches beispielsweise für Bewässerungs- oder Reinigungszwecke einsetzbar ist.

## Patentansprüche

1. Verfahren zum Auffangen von salzhaltigem Schmutzwasser (2), insbesondere in Niederschlag gelöstes Streusalz, mit einem Behälter (3) einer Vorrichtung (1), bei dem das Schmutzwasser (2) durch einen Einlass (6) eintritt und durch einen Auslass (11) mittels eines Verteilers (12) wahlweise einem Mischbehälter (13) zur Herstellung einer für eine Sole geeigneten Salzkonzentration, wofür dem Mischbehälter (13) weiteres Streusalz zugeführt wird, bis die Konzentration der Sole den gewünschten Wert erreicht hat, oder einer Auslassöffnung (14) zugeführt wird.

2. Verfahren nach Anspruch 1, **dadurch gekennzeichnet, dass** die Vorrichtung (1) einen Füllstandssensor (9) aufweist, der bei Erreichen eines maximalen Füllstandes (4) ein Signal auslöst.

3. Verfahren (1) nach Anspruch 1 oder 2, **dadurch gekennzeichnet, dass** die Vorrichtung (1) mit einer in den Behälter (3) hineinreichenden Spülleitung (16) ausgestattet ist, durch die eine Spülflüssigkeit einer Innenwandfläche (15) des Behälters zugeführt wird.

4. Verfahren (1) nach zumindest einem der vorhergehenden Ansprüche, **dadurch gekennzeichnet, dass** mit einem Sensor (8) der Vorrichtung (1) der Salzgehalt in dem Behälter (3) bestimmt wird.

## Claims

1. Method for capturing saline dirty water (2), particularly de-icing salt dissolved in precipitation, with a container (3) of a device (1), in which container the dirty water (2) enters through an inlet (6) and is delivered through an outlet (11) by means of a distributor (12) selectively to a mixing container (13) for producing a salt concentration suitable for a brine, for which purpose further de-icing salt is fed to the mixing container (13), until the concentration of the brine has reached the desired value, or to an outlet orifice (14).

2. Method according to Claim 1, **characterized in that** the device (1) has a filling-level sensor (9) which triggers a signal when a maximum filling level (4) is reached.

3. Method (1) according to Claim 1 or 2, **characterized in that** the device (1) is equipped with a scavenging line (16) which extends into the container (3) and through which a scavenging liquid is delivered to an inner wall surface (15) of the container.

4. Method (1) according to at least one of the preceding claims, **characterized in that** the salt content in the container (3) is determined by means of a sensor (8) of the device (1).

## Revendications

1. Procédé de collecte d'eau encrassée (2) contenant des sels, en particulier du sel d'épandage dissous dans les précipitations, à l'aide d'un récipient (3) d'un dispositif (1), récipient dans lequel l'eau encrassée (2) pénètre par une admission (6) et est sélectivement amenée par une sortie (11), au moyen d'un répartiteur (12), dans un récipient de mélange (13) servant à établir une concentration en sel qui convient pour un sol, un complément de ce sel d'épandage étant dans ce but apporté au récipient de mélange (13) jusqu'à ce que la concentration du sol ait atteint la valeur souhaitée, ou à une ouverture de sortie (14).

2. Procédé selon la revendication 1, **caractérisé en ce que** le dispositif (1) présente un détecteur de niveau (9) qui délivre un signal lorsqu'un niveau maximal (4) est atteint -

3. Procédé (1) selon les revendications 1 ou 2, **caractérisé en ce que** le dispositif (1) est équipé d'un conduit de rinçage (15) qui pénètre dans le récipient (3) et par lequel un liquide de rinçage est apporté sur une surface (15) d'une paroi intérieure du récipient.

4. Procédé (1) selon au moins l'une des revendications précédentes, **caractérisé en ce que** la teneur en sel dans le récipient (3) est déterminée à l'aide d'un détecteur (8) du dispositif (1).
